# EUROPEAN PATENT APPLICATION

(11) **EP 4 815 401 A1**
(43) Date of publication of application: **30.09.2026**
(21) Application number: 24906545.9
(22) Date of filing: 20.12.2024
(51) Int. Cl.: H04L 49/111

(54) **DATA EXCHANGE SYSTEM AND METHOD**

(30) Priority: 21.12.2023 CN 202311775785; 05.08.2024 CN 202411064478
(71) Applicant: Theo End Computing (Nanjing) Technology Co., Ltd., Nanjing, Jiangsu 210031 (CN)
(72) Inventor: ZHENG, Shengwei, Shenzhen, Guangdong 518129 (CN)
(74) Representative: Ran, Handong
(86) International application number: PCT/CN2024/141032
(87) International publication number: WO 2025/131072

(57) **Abstract**

The present application discloses a data exchange system and method, an electronic device and a medium. The system comprises: a plurality of physical ports used for data packet receiving on an input side and/or data packet sending on an output side, wherein the data exchange type of each physical port can be configured as any one of a plurality of data exchange types; a plurality of exchange units used for parsing and processing the data packets, wherein each exchange unit can be configured as one of the plurality of data exchange types; and a distribution and convergence unit used for distributing the data packets on the input side to corresponding exchange units on the basis of the data exchange type of each physical port, and sending, on the basis of processing results of the exchange units, the data packets to the corresponding physical ports for data packet sending on the output side. The system can process the transmission of data packets of a plurality of data exchange types, so that the access flexibility of computing nodes is improved, and the implementation cost of the system is reduced.

## Description

### CROSS-REFERENCE TO RELATED APPLICATIONS

This application claims priority to Chinese Patent Application No. 202311775785.5, entitled "Data Exchange System and Method", filed with the China National Intellectual Property Administration on December 21, 2023, and Chinese Patent Application No. 202411064478.0, entitled "Data Exchange System and Method", filed with the China National Intellectual Property Administration on August 5, 2024, which are incorporated herein by reference in their entirety.

### TECHNICAL FIELD

The present invention relates to distributed computing, and specifically to a data exchange system, a data exchange method, an electronic device and a medium.

### BACKGROUND

In distributed computing, for example in artificial intelligence (AI) model training, a computing node typically includes a plurality of different chips. Typical chips include CPUs, GPUs, network interface cards, and various application-specific accelerator chips. Communication is required among these chips, and switching chips are usually used to interconnect them for scalability. Interconnection requirements vary among different chips, and a computing node may include switching chips for supporting multiple data-exchange types. For example, Intel CPUs typically provide only PCIe interfaces externally and therefore can be interconnected with GPUs, network interface cards, application-specific accelerator chips and other chips only via PCIe switching chips. As PCIe bandwidth cannot meet the high-throughput requirements of AI training, NVIDIA has developed its own NV Switch chips to enable interconnection among multiple GPUs. Multiple application-specific accelerator chips, due to their communication characteristics, may be interconnected using switching chips supporting the Ethernet data-exchange type.

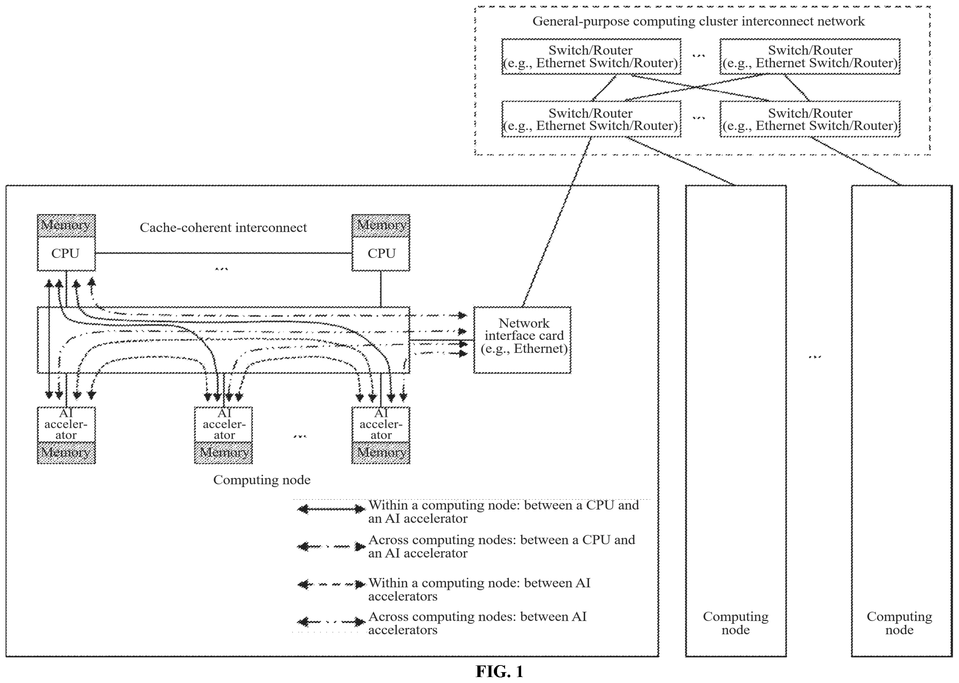

Referring to FIG. 1, a network topology for deploying AI accelerators based on a general-purpose computing cluster interconnect network is illustrated. The general-purpose computing cluster interconnect network composed of switches and routers is connected to a plurality of computing nodes. Each computing node mainly includes CPUs, network interface cards, AI accelerators, etc. CPUs are interconnected via proprietary cache coherence protocols implemented by a CPU manufacturer. CPUs, network interface cards, and AI accelerators from different manufacturers are interconnected via standard protocols, such as PCIe. Thus, within a computing node, communication between CPUs and AI accelerators, as well as communication among AI accelerators, is generally facilitated via PCIe switches. Across computing nodes, communication between CPUs and AI accelerators, as well as communication among AI accelerators, is facilitated via PCIe switches and further through network interface cards (e.g., Ethernet network interface cards).

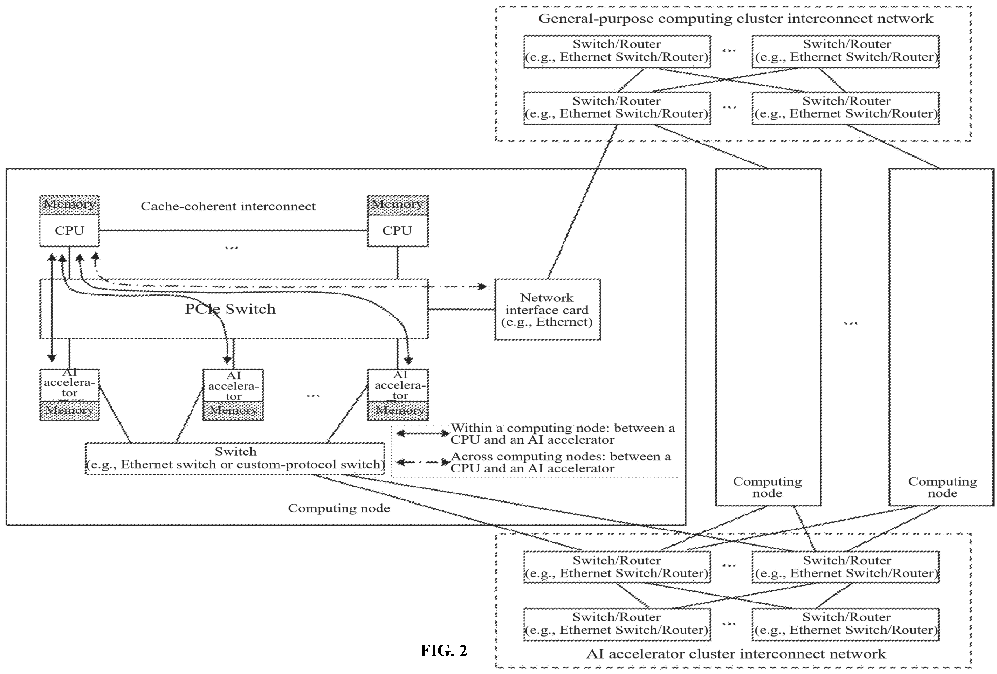

As AI models and AI training datasets continue to grow in scale, communication throughput requirements among AI accelerators within a single computing node are also becoming increasingly higher. The PCIe switch shown in FIG. 1 adopts a single-root model (i.e., communication between any two points must pass through the CPU), which results in low communication efficiency and is insufficient to support the high-throughput communication requirements among AI accelerators. Furthermore, updates and evolution of the PCIe protocol are completely under the control of Intel. Therefore, some accelerator manufacturers use standard Ethernet protocols or customized protocols for interconnection among their own accelerators. For example, NVIDIA defines NVLink/NVSwitch for interconnection among its own GPUs, enabling a single computing node to support interconnection of up to eight GPUs. Referring to FIG. 2, communication among AI accelerators within a computing node is realized using another type of switch. High-throughput communication traffic also exists among AI accelerators across computing nodes. If a network interface card connected via a PCIe switch is further routed through a general-purpose computing cluster interconnect network, the high-throughput communication requirements are still not satisfied, and interference may also occur between AI accelerator communication traffic and general-purpose computing communication traffic. Therefore, a dedicated AI accelerator cluster interconnect network is usually established across computing nodes. Thus, based on the network topology in which AI accelerators are deployed on a general-purpose computing cluster interconnect network, switches interconnecting the AI accelerators are provided with additional ports for connecting to the AI accelerator cluster interconnect network to enable interconnection among AI accelerators across computing nodes (See also FIG. 2).

A single computing node includes switches for two data exchange types. This mixed use of switching chips for multiple data exchange types not only increases the number of chips within the computing node but also increases power consumption and cost of the computing node. In addition, a switching chip has a fixed number of physical ports. In practical applications, it is very likely that physical ports of a switching chip for a certain data exchange type are exhausted and cannot be further expanded, while physical ports of switching chips for other data exchange types remain idle, thereby limiting the connectivity flexibility of the computing node.

### SUMMARY OF THE INVENTION

In view of the above, a primary objective of the present invention is to provide a data exchange system, a data exchange method, an electronic device, and a medium.

To achieve the above objective, the present invention adopts the following technical solutions.

In a first aspect, the present invention provides a data exchange system for handling transmission of data packets of multiple data exchange types. The system includes a plurality of physical ports, a plurality of switching units, and a distribution and collection unit.

The plurality of physical ports is configured to receive data packets on an input side and/or transmit data packets on an output side. Each physical port is configurable to support any one of the multiple data exchange types.

The plurality of switching units is configured to parse and process the data packets. Each of the switching units is configured to support a respective one of the multiple data exchange types.

The distribution and collection unit is configured to distribute data packets on the input side to corresponding switching units based on the data exchange type supported by respective physical ports, and transmit, based on processing results from the switching units, the data packets to corresponding physical ports for transmission on the output side.

Preferably, each physical port is provided with a configuration unit for configuring the data exchange type supported by the physical port.

Preferably, the distribution and collection unit is configured to receive a data packet from a first physical port, transmit, based on a data exchange type supported by the first physical port, the data packet to a switching unit supporting the data exchange type, receive a processing result from the switching unit, and transmit the data packet to a second physical port supporting the data exchange type based on the processing result.

Preferably, the system further includes a receiving-side physical-layer module and a transmitting-side physical-layer module.

The receiving-side physical-layer module is configured to perform receiving-side physical-layer processing on data packets received from the physical ports.

The transmitting-side physical-layer module is configured to perform transmitting-side physical-layer processing on the data packets transmitted by the distribution and collection unit to the physical ports.

Preferably, each switching unit includes a receiving-side link-layer module, a routing module, and a transmitting-side link-layer module.

The receiving-side link-layer module is configured to perform receiving-side link-layer processing on a data packet received from the distribution and collection unit.

The routing module is configured to look up a routing table based on a parsing result of the data packet and determine a physical port for transmitting the data packet.

The transmitting-side link-layer module is configured to perform transmitting-side link-layer processing on a parsed and processed data packet.

Preferably, each switching unit further includes a data packet parsing module and a data packet editing module.

The data packet parsing module is configured to parse the data packet processed by the receiving-side link-layer module.

The data packet editing module is configured to edit a data packet to be transmitted to the transmitting-side link-layer module.

Preferably, the system further includes a congestion management unit configured to perform queue management on the data packets of the multiple data exchange types from the input side, for data packet transmission on the output side.

Preferably, the data exchange types include CXL, PCIe, and Ethernet switching.

In a second aspect, the present invention provides a data exchange method for handling transmission of data packets of multiple data exchange types. The method includes the following steps:
receiving a data packet on an input side for data packet transmission;
obtaining a data exchange type supported by a physical port that receives the data packet, determining a switching unit for the data packet based on the data exchange type, and transmitting the data packet to the switching unit;
parsing and processing the data packet by the switching unit; and
transmitting, based on a processing result from the switching unit, the data packet to a corresponding physical port for transmission on an output side.

Preferably, the method further includes the following step:
preconfiguring a data exchange type supported by each physical port.

Preferably, receiving a data packet on an input side for data packet transmission includes the following step:
performing receiving-side physical-layer processing on a data packet received by each physical port.

Preferably, obtaining a data exchange type supported by a physical port that receives the data packet, determining a switching unit for the data packet based on the data exchange type, and transmitting the data packet to the switching unit includes the following step:
receiving a data packet from a first physical port, and transmitting, based on a data exchange type supported by the first physical port, the data packet to a switching unit supporting the data exchange type.

Preferably, parsing and processing the data packet by the switching unit includes the following steps:
performing receiving-side link-layer processing on the data packet received from the input side;
parsing the data packet having undergone the receiving-side link-layer processing, looking up a routing table based on a parsing result, and determining a physical port for transmitting the data packet; and
editing the parsed data packet and performing transmitting-side link-layer processing on the edited data packet.

Preferably, transmitting, based on a processing result from the switching unit, the data packet to a corresponding physical port for transmission on an output side includes the following step:
receiving the processing result from the switching unit, and transmitting the data packet to a second physical port supporting the data exchange type based on the processing result.

Preferably, transmitting, based on a processing result from the switching unit, the data packet to a corresponding physical port for transmission on an output side includes the following step:
performing transmitting-side physical-layer processing on the data packet transmitted to the corresponding physical port.

Preferably, the method further includes the following step:
performing queue management on the data packets of the multiple data exchange types from the input side, for data packet transmission on the output side.

Preferably, the data exchange types include CXL, PCIe, and Ethernet switching.

In a third aspect, the present invention provides a switching chip. The switching chip includes the system as described in the above first aspect.

Preferably, the switching chip is used in a distributed computing node.

The present invention, in the third aspect, further provides a switching chip. The switching chip includes a programmable processing device and a memory communicatively connected to the programmable processing device.

The memory has stored thereon a computer program executable by the programmable processing device. The computer program, when executed by the programmable processing device, causes the programmable processing device to perform the method as described in the above second aspect.

Preferably, the switching chip is used in a distributed computing node.

In a fourth aspect, the present invention provides an electronic device, including a processor and a memory having stored thereon a computer program. The computer program, when executed by the processor, causes the method as described in the above second aspect to be implemented.

In a fifth aspect, the present invention provides a computer-readable storage medium having stored thereon a computer program. The computer program, when executed, implements the method as described in the above second aspect.

Additional aspects and advantages of the present invention will be partly set forth in the following description, and partly become apparent from the following description, or may be understood through practice of the present invention.

### BRIEF DESCRIPTION OF THE DRAWINGS

FIG. 1 is a schematic diagram of an existing computing node network topology based on a general-purpose computing cluster interconnect network;
FIG. 2 is a schematic diagram of an existing computing node network topology based on a general-purpose computing cluster interconnect network and an AI accelerator cluster interconnect network;
FIG. 3 is a schematic flow chart of a preferred implementation of a data exchange method provided in the present invention;
FIG. 4 is a schematic flow chart of another preferred implementation of the data exchange method provided in the present invention; and
FIG. 5 is a schematic diagram of a computing node network topology provided in a preferred embodiment of the present invention.

### DETAILED DESCRIPTION

To further elaborate on technical means adopted in the present invention to accomplish the intended objective of the application, and effects achieved thereby, the method, system, electronic device and computer-readable storage medium proposed based on the present invention, as well as specific implementations, methods, steps, features and effects thereof are described in detail below in conjunction with the accompanying drawings and preferred embodiments.

A data exchange system for handling transmission of data packets of multiple data exchange types includes: a plurality of physical ports, a plurality of switching units, and a distribution and collection unit.

The plurality of physical ports is configured to receive data packets on an input side and/or transmit data packets on an output side. Each physical port is configurable to support any one of the multiple data exchange types.

The plurality of switching units is configured to parse and process data packets. Each of the switching units is configured to support a respective one of the multiple data exchange types.

The distribution and collection unit is configured to distribute data packets on the input side to corresponding switching units based on the data exchange types of respective physical ports, and transmit, based on processing results from the switching units, the data packets to corresponding physical ports for transmission on the output side.

Specifically, the data exchange system, such as a switching chip, typically has a plurality of physical ports for transmitting data packets. Generally, according to the direction of traffic flow, the physical ports may be classified into input physical ports and output physical ports. When a physical port functions as an input physical port, it is used for data packet reception on the input side. When a physical port functions as an output physical port, it is used for data packet transmission on the output side.

Regarding the data exchange types, in a computing node, a plurality of chips, such as CPUs, AI accelerators (including GPUs/GPGPUs, TPUs, NPUs, etc.), and DPUs (including NICs/SNICs, etc.), are interconnected. Generally, from the perspective of a cache access model, the data exchange types may be classified into cache-coherent interconnect type and cache-noncoherent interconnect type. In the switching chip, a plurality of switching units for different data exchange types are provided. The distribution and collection unit may, based on data exchange types configured for the physical ports, distribute data packets received from the input side to corresponding switching units respectively supporting the data exchange types, arbitrate between the switching units respectively supporting different data exchange types, and then output the data packets to corresponding physical ports for data packet transmission on the output side.

Regarding the distribution and collection unit, data packet data of different data exchange types on the input side may be processed and then distributed to corresponding switching units for link-layer processing, and data packets parsed and processed by the switching units are transmitted to corresponding physical ports on the output side.

Consequently, the data exchange system of the present invention can implement transmission of data packets of multiple data exchange types. The data exchange types supported by the physical ports may be configured according to actual needs to connect devices for different data exchange types, thereby improving the connectivity flexibility of a computing node. The distribution and collection unit can, based on the data exchange types supported by the physical ports, distribute data packets to corresponding switching units respectively supporting the data exchange types to meet data packet transmission requirements. In this way, different chips or devices for multiple data exchange types in the computing node are integrated, such that communication transmissions of the multiple data exchange types can share physical ports, thereby significantly improving the utilization of the physical ports. This effectively reduces the number of switching chips or devices within the computing node, and helps lower system power consumption and costs. In addition, the switching chip adaptable to multiple data exchange types can eliminate the need to separately develop different switching chips for different data exchange types, thereby effectively reducing research and development costs of chip manufacturers.

As an optional embodiment, each physical port is provided with a configuration unit for configuring the data exchange type supported by the physical port.

Specifically, the configuration unit may configure the data exchange type supported by each physical port according to actual requirements to meet connectivity requirements of different chips or devices. For example, if a physical port is used for interconnection between CPUs, then the data exchange type supported by the physical port may be configured as a cache-coherent CXL type. As another example, if a physical port is used for interconnection between a CPU and a GPU, then the data exchange type supported by the physical port may be configured as a cache-noncoherent PCIe type. If the bandwidth requirement of a cache-coherent interconnect is high, the number of physical ports for cache-noncoherent interconnect may be reduced, and more physical ports may be configured with a data exchange type supporting cache-coherent interconnect.

In addition, if a physical port is used for interconnection between GPUs, then the data exchange type supported by the physical port may be configured as a peer-to-peer protocol Ethernet type. It should be noted that the peer-to-peer protocol is defined with respect to PCIe/CXL protocols. This is because there is a root node in PCIe/CXL protocols, and communication between any two nodes passes through the root node. That is, no nodes in the network are in a peer-to-peer relationship. Therefore, PCIe/CXL represents a network model that is based on a non-peer-to-peer protocol. In contrast, communication between any two nodes in an Ethernet network does not need to pass through a third node for relaying, and therefore Ethernet network represents a network model that is based on a peer-to-peer protocol. Consequently, the data exchange type supported by each physical port may be configured by the configuration unit to meet transmission requirements for different data exchange types. This effectively improves the utilization of the physical ports, enabling the physical ports to be shared in transmission of data packets of multiple data exchange types, and helping improve the connectivity flexibility of the data exchange system.

As an optional embodiment, the distribution and collection unit is configured to receive a data packet from a first physical port, transmit, based on a data exchange type supported by the first physical port, the data packet to a switching unit supporting the data exchange type, receive a processing result from the switching unit, and transmit the data packet to a second physical port supporting the data exchange type based on the processing result.

Specifically, on the input side for data packet transmission, the plurality of physical ports receive data packets of different data exchange types, and the distribution and collection unit distributes, based on the data exchange types supported by the respective physical ports, the data packets to corresponding switching units respectively supporting the data exchange types for receiving-side link-layer processing. On the output side for data packet transmission, the distribution and collection unit arbitrates between the switching units respectively supporting different data exchange types, and transmits the data packets to corresponding physical ports for data packet transmission on the output side.

In this way, the distribution and collection unit enables transmission of data packets of different data exchange types within the same data exchange system for interconnection between different chips within a computing node, eliminating the need to provide different data exchange systems to support transmission of data packets of different data exchange types, and thereby realizing simultaneous support of multiple data exchange types.

As an optional embodiment, the system further includes a receiving-side physical-layer module and a transmitting-side physical-layer module.

The receiving-side physical-layer module is configured to perform receiving-side physical-layer processing on data packets received from the physical ports.

The transmitting-side physical-layer module is configured to perform transmitting-side physical-layer processing on the data packets transmitted by the distribution and collection unit to the physical ports.

Specifically, data packets received by the physical ports on the input side undergo receiving-side physical-layer processing and are then transmitted to the switching units via the distribution and collection unit for subsequent receiving-side link-layer processing; correspondingly, after being parsed and processed by the switching units (including transmission-side link-layer processing), the data packets are transmitted to the output side via the distribution and collection unit, subjected to transmission-side physical-layer processing, and then transmitted out through corresponding physical ports.

As an optional embodiment, each switching unit includes a receiving-side link-layer module, a routing module, and a transmitting-side link-layer module.

The receiving-side link-layer module is configured to perform receiving-side link-layer processing on a data packet received from the distribution and collection unit.

The routing module is configured to look up a routing table based on a parsing result of the data packet and determine a physical port for transmitting the data packet.

The transmitting-side link-layer module is configured to perform transmitting-side link-layer processing on a parsed and processed data packet.

Specifically, a data packet is subjected to receiving-side physical-layer processing on the input side and then transmitted by the distribution and collection unit to a corresponding switching unit. The switching unit processes the data packet through the receiving-side link-layer module and the transmitting-side link-layer module, and determines the next physical port for transmitting the data packet by parsing the data packet and looking up a routing table.

As a further improvement on the above embodiment, each switching unit further includes a data packet parsing module and a data packet editing module.

The data packet parsing module is configured to parse the data packet processed by the receiving-side link-layer module.

The data packet editing module is configured to edit a data packet to be transmitted to the transmitting-side link-layer module.

Specifically, a routing table is queried based on a parsing result of the data packet to determine a physical port for transmitting the data packet.

As a further improvement on the above embodiment, the system further includes a congestion management unit configured to perform queue management on data packets of multiple data exchange types from the input side, for transmission of the data packets on the output side.

Specifically, a data exchange system includes a plurality of input physical ports and a plurality of output physical ports. During data packet transmission, data packets from a plurality of input physical ports may simultaneously be destined for the same output physical port, or data packets from a high-speed input physical port need to be forwarded to a low-speed output physical port. This can lead to congestion. The congestion management unit may be used to handle conditions occurring during such data packet transmission. The congestion management unit typically places data packets into different queues based on information such as data packet priority, input physical ports, and output physical ports, and then selects data packets from these different queues through a scheduler based on the bandwidth capacity of an output physical port and preset scheduling parameters, such as priority and weight, thereby determining the order in which the data packets are transmitted from the output physical port. Generally speaking, the congestion management unit only needs lengths of the data packets, not specific data exchange types of the data packets to be transmitted. Therefore, this embodiment enables the reuse of the congestion management unit in the system supporting multiple data exchange types, instead of simply integrating a plurality of systems for different data exchange types, thereby achieving a system implementation cost lower than that of integrating separate systems.

In this way, the congestion management unit manages data packet transmission queues. The congestion management unit is generalized as such that it can receive, from switching units supporting different data exchange types, data packets to be transmitted, and transmit data packets according to scheduling parameters for data packet transmission, to optimize data packet processing performance within the same data exchange system while enabling the sharing and reuse of generic units or modules across different data exchange types within the system, thereby helping reduce implementation costs.

As an optional embodiment, the data exchange types include CXL, PCIe, and Ethernet switching.

Specifically, data exchange types that the data exchange system supports include, but are not limited to, CXL, PCIe, and Ethernet switching.

PCIe (PCI Express) protocol has replaced all internal buses, including AGP and PCI, due to its high performance, high scalability, high reliability, and excellent compatibility. However, in the face of TB-scale growth and the trend toward heterogeneous computing, PCIe has come under pressure in terms of memory utilization efficiency, latency, and data throughput.

PCIe-based CXL (Compute Express Link) protocol, as a new open interconnect technology standard, enables high-speed, efficient interconnection between a CPU and a GPU, a CPU and an FPGA, or a CPU and other accelerators, thereby satisfying the requirements of high-performance heterogeneous computing. It also maintains coherence between the CPU memory space and memory/cache of connected devices. Overall, its advantages can be summarized in two aspects: exceptional compatibility and memory/cache coherence.

Support for data packet transmission of different data exchange types within the same data exchange system, for example, satisfies requirements for both cache coherence and cache-noncoherence, improves the utilization of physical ports, and effectively reduces the number of switching chips or devices within a computing node, thus helping lower system power consumption and costs.

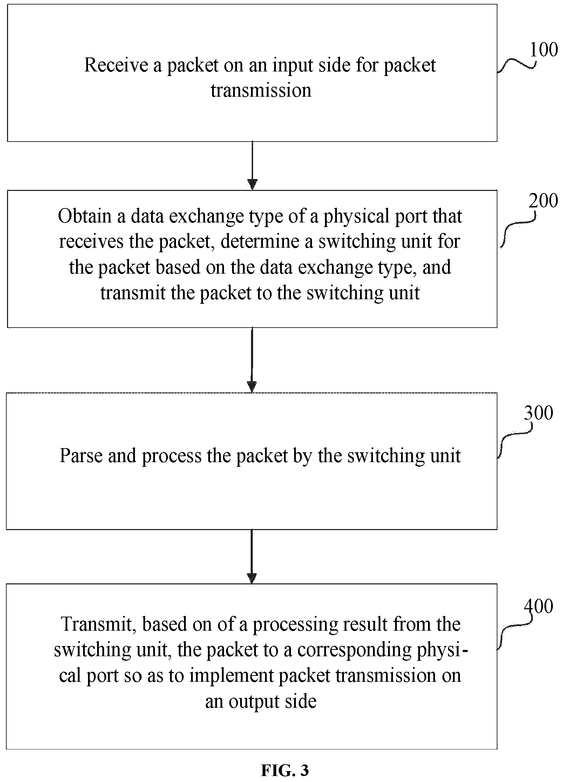

Referring to FIG. 3 which shows a data exchange method used for handling transmission of data packets of multiple data exchange types, the method includes the following steps.

In step S100, a data packet is received on an input side for data packet transmission.

In step S200, a data exchange type supported by a physical port that receives the data packet is obtained; a switching unit is determined for the data packet based on the data exchange type; and the data packet is transmitted to the switching unit.

In step S300, the switching unit parses and processes the data packet.

In step S400, the data packet is transmitted to a corresponding physical port based on a processing result from the switching unit, for transmission on an output side.

Through the above steps, a transmission path for each data packet is determined based on the data exchange type supported by each physical port, thereby enabling transmission of data packets of multiple data exchange types. This allows for sharing of physical ports in communication transmission of multiple data exchange types, thereby effectively reducing the number of switching chips or devices within a computing node, and helping lower system power consumption and costs.

As an optional embodiment, the method further includes the following step:
preconfiguring a data exchange type supported by each physical port.

Through the above step, the data exchange type supported by each physical port is configured to meet transmission requirements of different data exchange types. This effectively improves the utilization of physical ports, enabling the physical ports to be shared in transmission of data packets of multiple data exchange types, and helping improve the connectivity flexibility of the data exchange system.

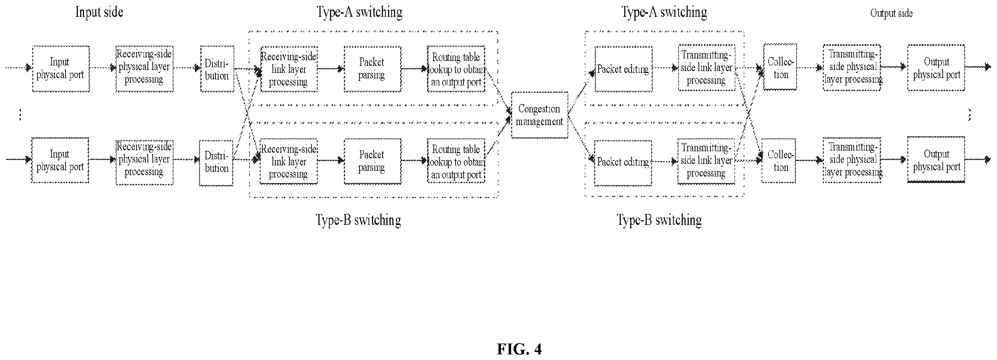

As an optional embodiment, referring to FIG. 4, the step of receiving a data packet on an input side for data packet transmission includes the following step:
performing receiving-side physical-layer processing on a data packet received by each physical port.

Through the above step, a data packet received from the input side is subjected to receiving-side physical-layer processing and then transmitted to a switching unit via a distribution and collection unit for subsequent receiving-side link-layer processing.

As an optional embodiment, the step of obtaining a data exchange type supported by a physical port that receives the data packet, determining a switching unit for the data packet based on the data exchange type, and transmitting the data packet to the switching unit includes the following step:
receiving a data packet from a first physical port, and transmitting, based on a data exchange type supported by the first physical port, the data packet to a switching unit supporting the data exchange type.

Through the above step, on the input side for data packet transmission, a plurality of physical ports receive data packets of different data exchange types, and based on the data exchange types supported by respective physical ports, the data packets are distributed to corresponding switching units supporting the data exchange types for receiving-side link-layer processing. This enables transmission of data packets of different data exchange types within the same data exchange system for interconnection between different chips within a computing node, eliminating the need to provide different data exchange systems to support transmission of data packets of different data exchange types, and realizing simultaneous support of multiple data exchange types.

As an optional embodiment, referring to FIG. 4, the step of parsing and processing the data packet by the switching unit includes the following steps:
performing receiving-side link-layer processing on the data packet received from the input side;
parsing the data packet having undergone the receiving-side link-layer processing, looking up a routing table based on a parsing result, and determining a physical port for transmitting the data packet; and
editing the parsed data packet and performing transmitting-side link-layer processing.

Through the above steps, a data packet is subjected to receiving-side physical-layer processing on the input side and then transmitted to a corresponding switching unit. The switching unit processes the data packet through a receiving-side link-layer module and a transmitting-side link-layer module, and determines the next physical port for transmitting the data packet by parsing the data packet and looking up a routing table.

As an optional embodiment, the step of transmitting, based on a processing result from the switching unit, the data packet to a corresponding physical port for transmission on an output side includes the following step:
receiving the processing result from the switching unit, and transmitting the data packet to a second physical port supporting the data exchange type based on the processing result.

Through the above step, on the output side for data packet transmission, the distribution and collection unit arbitrates between switching units respectively supporting different data exchange types, and transmits each data packet to a corresponding physical port for transmission on the output side.

As an optional embodiment, referring to FIG. 4, the step of transmitting, based on a processing result from the switching unit, the data packet to a corresponding physical port for transmission on an output side includes the following step:
performing transmitting-side physical-layer processing on the data packet transmitted to the corresponding physical port.

Through the above step, after being parsed and processed by the switching unit and undergoing the transmission-side link-layer processing, the data packet is transmitted to the output side, subjected to transmission-side physical-layer processing, and then transmitted out through the corresponding physical port.

As an optional embodiment, referring to FIG. 4, the method further includes the following step:
performing queue management on data packets of multiple data exchange types from the input side, for data packet transmission on the output side.

Through the above step of congestion management for internal data packet transmission, data packets can be received from switching units supporting different data exchange types, and then transmitted based on scheduling parameters for data packet transmission. This optimizes data packet processing performance within the same data exchange system while enabling sharing and reuse of generic units or modules across different data exchange types within the system, thereby helping reduce implementation costs.

As an optional embodiment, the data exchange types include CXL, PCIe, and Ethernet switching.

Support for transmission of data packets of different data exchange types within the same data exchange system, for example, satisfies requirements for both cache coherence and cache-noncoherence, improves the utilization of physical ports, and effectively reduces the number of switching chips or devices within a computing node, thus helping lower system power consumption and costs.

The present invention further provides a switching chip. The switching chip includes the system as described in the above embodiments.

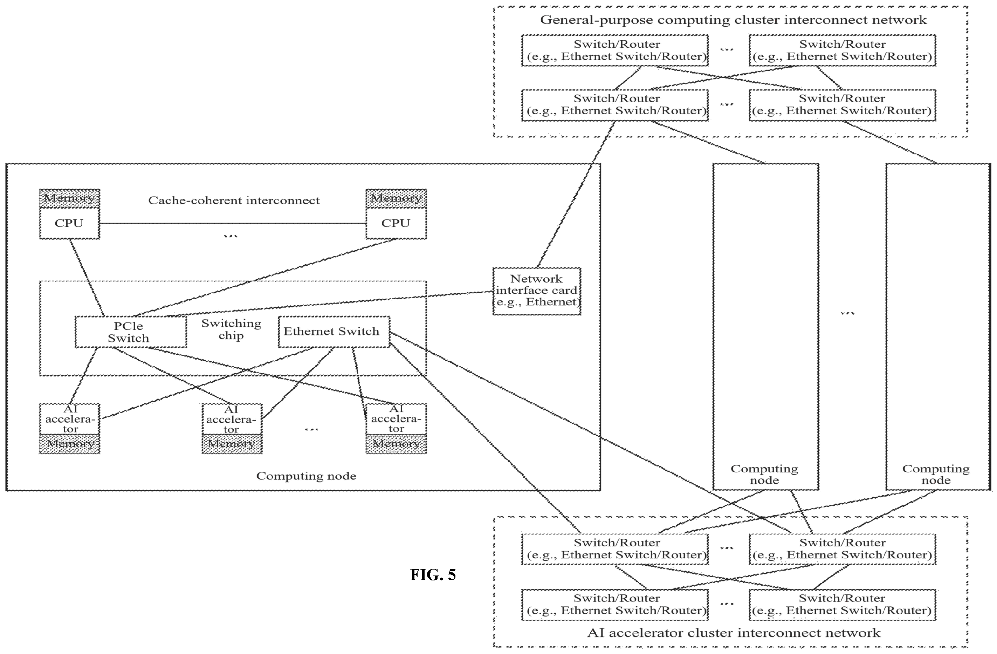

Referring to FIG. 5, the switching chip is used in a computing node. The switching chip includes, but is not limited to, a PCIe switch module and an Ethernet switch module. A CPU and an AI accelerator may be interconnected through the PCIe switch module of the switching chip, and AI accelerators across computing nodes may be interconnected via the Ethernet switch module of the switching chip and an AI accelerator cluster interconnect network. In addition, AI accelerators within the computing node may be interconnected through the PCIe switch module and/or the Ethernet switch module. As described above, PCIe is a network model based on a non-peer-to-peer protocol, in which communication between any two nodes passes through a root node, while Ethernet is a network model based on a peer-to-peer protocol in which communication between any two nodes does not need to pass through a third node for relaying.

In this way, the number of switching chips or devices within the computing node is obviously reduced, and interference between AI accelerator communication traffic and general-purpose computing communication traffic can also be prevented.

As an optional embodiment, the switching chip is used in a distributed computing node.

The present invention further provides another switching chip. The switching chip includes a programmable processing device and a memory communicatively connected to the programmable processing device.

The memory has stored thereon a computer program executable by the programmable processing device. The computer program, when executed by the programmable processing device, causes the programmable processing device to perform the method as described in the above embodiments.

As an optional embodiment, the switching chip is used in a distributed computing node.

The present invention further provides an electronic device, including a processor and a memory having a computer program stored thereon. The computer program, when executed by the processor, causes the data exchange method as described in the above embodiments to be implemented.

The present invention further provides a computer-readable storage medium having a computer program stored thereon. The computer program is executable to implement the data exchange method as described in the above embodiments.

The switching chip, the electronic device, and the computer-readable storage medium in the present invention, by using the above-described system or method, realize sharing of physical ports for data packet transmission. This not only helps improve the connectivity flexibility of a computing node, but also effectively reduces the number of switching chips or devices within the computing node.

The above description only involves preferred embodiments of the present invention and does not limit the present invention in any way. Although the present invention has been disclosed above by way of preferred embodiments, the present invention is not limited thereto. Equivalent embodiments may be obtained by any person skilled in the art by making alterations or modifications to the technical contents described above without departing from the technical solutions of the present invention. Any amendments, equivalent variations, and modifications made to the above embodiments based on the technical essence of the present invention without departing from the technical solutions of the present invention fall within the scope of the technical solutions of the present invention.

## Claims

1. A data exchange system for handling transmission of data packets of multiple data exchange types, comprising:
a plurality of physical ports configured to receive data packets on an input side and/or transmit data packets on an output side, wherein each of the physical ports is configurable to support any one of the multiple data exchange types;
a plurality of switching units configured to parse and process data packets, wherein each of the switching units is configured to support a respective one of the multiple data exchange types; and
a distribution and collection unit configured to distribute data packets on the input side to corresponding switching units based on the data exchange types supported by respective physical ports, and transmit, based on processing results from the switching units, the data packets to corresponding physical ports for transmission on the output side.

2. The system according to claim 1, wherein each of the physical ports is provided with a configuration unit for configuring the data exchange type supported by the physical port.

3. The system according to claim 2, wherein the distribution and collection unit is configured to:
receive a data packet from a first physical port;
transmit, based on a data exchange type supported by the first physical port, the data packet to a switching unit supporting said data exchange type;
receive a processing result from the switching unit; and
transmit the data packet to a second physical port supporting said data exchange type based on the processing result.

4. The system according to claim 1, further comprising:
a receiving-side physical-layer module configured to perform receiving-side physical-layer processing on data packets received from physical ports; and
a transmitting-side physical-layer module configured to perform transmitting-side physical-layer processing on data packets transmitted by the distribution and collection unit to physical ports.

5. The system according to claim 1, wherein each of the switching units comprises:
a receiving-side link-layer module configured to perform receiving-side link-layer processing on a data packet received from the distribution and collection unit;
a routing module configured to look up a routing table based on a parsing result of the data packet and determine a physical port for transmitting the data packet; and
a transmitting-side link-layer module configured to perform transmitting-side link-layer processing on a parsed and processed data packet.

6. The system according to claim 5, wherein each of the switching units further comprises:
a data packet parsing module configured to parse the data packet processed by the receiving-side link-layer module; and
a data packet editing module configured to edit a data packet to be transmitted to the transmitting-side link-layer module.

7. The system according to claim 1, further comprising a congestion management unit configured to perform queue management on data packets of multiple data exchange types from the input side, for transmission of the data packets on the output side.

8. The system according to any one of claims 1 to 7, wherein the data exchange types comprise CXL, PCIe, and Ethernet switching.

9. A data exchange method for handling transmission of data packets of multiple data exchange types, comprising:
receiving a data packet on an input side for data packet transmission;
obtaining a data exchange type supported by a physical port that receives the data packet, determining a switching unit for the data packet based on said data exchange type, and transmitting the data packet to the switching unit;
parsing and processing the data packet by the switching unit; and
transmitting, based on a processing result from the switching unit, the data packet to a corresponding physical port for transmission on an output side.

10. The method according to claim 9, further comprising:
preconfiguring a data exchange type supported by each physical port.

11. The method according to claim 9, wherein said receiving a data packet on an input side for data packet transmission comprises:
performing receiving-side physical-layer processing on a data packet received by each physical port.

12. The method according to claim 9, wherein said obtaining a data exchange type supported by a physical port that receives the data packet, determining a switching unit for the data packet based on said data exchange type, and transmitting the data packet to the switching unit comprises:
receiving a data packet from a first physical port, and transmitting, based on a data exchange type supported by the first physical port, the data packet to a switching unit supporting said data exchange type.

13. The method according to claim 9, wherein said parsing and processing the data packet by the switching unit comprises:
performing receiving-side link-layer processing on the data packet received from the input side;
parsing the data packet having undergone the receiving-side link-layer processing, looking up a routing table based on a parsing result, and determining a physical port for transmitting the data packet; and
editing the parsed data packet and performing transmitting-side link-layer processing on the edited data packet.

14. The method according to claim 9, wherein said transmitting, based on a processing result from the switching unit, the data packet to a corresponding physical port for transmission on an output side comprises:
receiving the processing result from the switching unit, and transmitting the data packet to a second physical port supporting said data exchange type based on the processing result.

15. The method according to claim 9, wherein said transmitting, based on a processing result from the switching unit, the data packet to a corresponding physical port for transmission on an output side comprises:
performing transmitting-side physical-layer processing on the data packet transmitted to the corresponding physical port.

16. The method according to claim 9, further comprising:
performing queue management on data packets of multiple data exchange types from the input side, for transmission of the data packets on the output side.

17. The method according to any one of claims 9 to 16, wherein the data exchange types comprise CXL, PCIe, and Ethernet switching.

18. A switching chip, comprising the system of any one of claims 1 to 8.

19. The switching chip according to claim 18, wherein the switching chip is used in a distributed computing node.

20. A switching chip, comprising:
a programmable processing device; and
a memory communicatively connected to the programmable processing device,
wherein the memory has stored thereon a computer program executable by the programmable processing device, wherein the computer program, when executed by the programmable processing device, causes the programmable processing device to perform the method of any one of claims 9 to 17.

21. The switching chip according to claim 20, wherein the switching chip is used in a distributed computing node.

22. An electronic device, comprising:
a processor; and
a memory having stored thereon a computer program,
wherein the computer program, when executed by the processor, causes the method of any one of claims 9 to 17 to be implemented.

23. A computer-readable storage medium having stored thereon a computer program, wherein the computer program, when executed, implements the method of any one of claims 9 to 17.
